# EUROPÄISCHE PATENTSCHRIFT

(11) **EP 3 241 761 B1**
(45) Veröffentlichungstag und Bekanntmachung des Hinweises auf die Patenterteilung: **16.10.2019**
(21) Anmeldenummer: 17163888.5
(22) Anmeldetag: 30.03.2017
(51) Int. Cl.: B65B 11/30, B65B 11/40, B65B 25/06, B65B 25/10, B65B 49/02, B65B 49/08, B65B 49/10, B65B 49/12, B65B 5/02, B65B 11/00, B65B 11/10, B65B 11/20, B65B 49/14, B65B 11/06

(54) **ÜBERGABEEINRICHTUNG, INSBESONDERE ALS ROBOTERGREIFER**
TRANSFER DEVICE, IN PARTICULAR AS ROBOT GRIPPER
DISPOSITIF DE TRANSFERT EN PARTICULIER PRÉHENSEUR DE ROBOT

(30) Priorität: 03.05.2016 DE 102016108212
(43) Veröffentlichungstag der Anmeldung: 08.11.2017
(73) Patentinhaber: Weber Maschinenbau GmbH Breidenbach, 35236 Breidenbach (DE)
(72) Erfinder: Gerhardt, Markus, 35216 Biedenkopf (DE); Kuhmichel, Christoph, 57334 Bad Laasphe (DE); Nispel, Thomas, 35232 Dautphetal (DE); Rother, Ingo, 35236 Breidenbach (DE); Runkel, Andreas, 35216 Biedenkopf (DE); Walsch, Julia, 57339 Erndtebrück (DE); Zecher, Steffen, 35460 Staufenberg (DE)
(74) Vertreter: Manitz Finsterwald Patent- und Rechtsanwaltspartnerschaft mbB

(56) Entgegenhaltungen:
- EP-A2- 1 012 040
- DE-B3-102011 121 642
- US-A- 2 768 492
- US-A- 5 768 857
- US-A- 6 109 007

## Beschreibung

Die vorliegende Erfindung betrifft eine Übergabeeinrichtung, die als Robotergreifer oder wenigstens als ein Teil eines Robotergreifers ausgebildet ist, zur Aufnahme wenigstens eines auf einem Grundabschnitt eines Produktträgers liegenden Produkts und des Produktträgers von einer Förder- und/oder Bearbeitungseinrichtung für das Produkt und/oder für den Produktträger und zur Zuführung des Produkts mitsamt dem Produktträger zu einer nachgeordneten Einrichtung, insbesondere einer Verpackungsmaschine. Die Erfindung betrifft außerdem Verfahren zur Handhabung von Produkten.

Produktträger, die auch als L-Boards bezeichnet werden, sind normalerweise flache, vorzugsweise rechteckige, plattenartige Gebilde, z.B. aus Karton oder Papier, die in einen Grundabschnitt sowie einen in einem Randbereich des Produktträgers liegenden Abdeckabschnitt unterteilt werden können. Es ist vorgesehen, dass ein Lebensmittelprodukt, wie etwa eine aus mehreren Scheiben bestehende Portion eines Lebensmittelprodukts, auf dem Grundabschnitt eines auf einer Auflagefläche liegenden Produktträgers abgelegt wird, und dass dann der Abdeckabschnitt um eine Knicklinie, die zwischen Grundabschnitt und Abdeckabschnitt verläuft, nach oben und zur Seite in Richtung Grundabschnitt verschwenkt bzw. gefaltet wird, so dass der Abdeckabschnitt das Produkt zumindest teilweise verdeckt.

Der Produktträger lässt sich zusammen mit dem Produkt einer Verpackungsmaschine zuführen, in der die Kombination aus Produktträger und Produkt verpackt wird. In der Verpackung wird das Produkt teilweise durch den verschwenkten bzw. gefalteten Abdeckabschnitt verdeckt, wodurch die Präsentation des Produkts verbessert wird.

Die EP 2 559 625 A1 beschreibt eine Lebensmittelverarbeitungsvorrichtung für Produktabschnitte eines Lebensmittels, die eine Kombiniervorrichtung aufweist, in der die Produktabschnitte mit Produktträgern kombiniert werden. Ein Produktträgerzuführungssystem ist ausgelegt, in Abhängigkeit von einer Eigenschaft der Produktabschnitte jeweils einen bestimmten Produktträger von wenigstens zwei verschiedenen Arten von Produktträgern mit dem Produktabschnitt zu kombinieren. Das Produktträgerzuführungssystem weist eine Produktträgerzuführung auf, die aus verschiedenen Vorräten von Produktträgern in einem Produktträgerspeicher verschiedene Arten von Produktträgern bereitstellt und, wenn ein Produktabschnitt an der Produktträgerzuführung vorbeiläuft, einen Produktträger in Abhängigkeit von der Eigenschaft des Produktabschnitts bereitstellt, der mit dem Produktabschnitt kombiniert wird.

Eine Falteinrichtung bzw. ein Verfahren zum Bearbeiten eines oder mehrerer L-Boards ist aus DE 10 2011 121 642 B3 bekannt.

Die Produktträger mit darauf liegendem Produkt können von der Förder- und/oder Bearbeitungseinrichtung bereitgestellt werden. Bei dieser Einrichtung kann es sich beispielsweise um eine Aufschneidemaschine für Lebensmittelprodukte handeln, die auch als Hochleistungsslicer bezeichnet wird, und der eine Vorrichtung zur Bereitstellung der Produktträger und zum Auflegen der erzeugten Produkte auf die Produktträger nachgeordnet ist.

Ein Hochleistungsslicer wird beispielsweise in der EP 2 543 484 A1 beschrieben. Dokument US 5 768 857 offenbart eine bekannte Übergabeeinrichtung.

Zur Zuführung eines Produktträgers mit aufliegendem Produkt zu einer nachgeordneten Einrichtung, insbesondere einer Verpackungsmaschine, kann eine Übergabeeinrichtung zum Einsatz kommen, bei der es sich um einen Robotergreifer eines Roboters handeln kann. Die Übergabeeinrichtung kann den Produktträger mitsamt dem Produkt aufnehmen und der Verpackungsmaschine zuführen, z.B. durch Einlegen von Produktträger und Produkt in eine Verpackung.

Der vorliegenden Erfindung liegt die Aufgabe zugrunde, eine verbesserte und in ihrer Funktionalität erweiterte Übergabeeinrichtung bereitzustellen.

Die Aufgabe wird durch eine Übergabeeinrichtung mit den Merkmalen des Anspruchs 1 gelöst und insbesondere dadurch, dass eine Übergabeeinrichtung der eingangs genannten Art dadurch weitergebildet wird, dass diese eine Verschwenkeinrichtung zum Verschwenken eines mit dem Grundabschnitt zusammenhängenden Abdeckabschnitts um eine zwischen dem Abdeckabschnitt und dem Grundabschnitt verlaufende Knicklinie aufweist.

Bei der erfindungsgemäßen Übergabeeinrichtung ist vorgesehen, dass diese den Abdeckabschnitt gegenüber dem Grundabschnitt um die Knicklinie verschwenken und somit eine wenigstens teilweise Verdeckung des auf dem Grundabschnitt liegenden Produkts durch den Abdeckabschnitt bewirken kann. Eine vorgeordnete, beispielsweise im Bereich der Förder- und/oder Bearbeitungseinrichtung angeordnete Verschwenkeinrichtung kann somit eingespart oder so ausgebildet werden, dass diese den Abdeckabschnitt nur noch teilweise verschwenkt oder nur anhebt.

Mittels der Übergabeeinrichtung kann ein "fertiges" Produkt, einschließlich eines Produktträgers mit gefaltetem Abdeckabschnitt, erzeugt und bspw. einer Verpackungsmaschine zugeführt werden, z.B. durch Einlegen des fertigen Produkts in eine Verpackung.

Bei dem Produkt kann es sich um ein Lebensmittel handeln. Das Produkt kann zum Beispiel aus einer Scheibe oder einer Portion mit mehreren Scheiben wenigstens eines Lebensmittels, wie etwa Wurst, Fleisch oder Käse, bestehen. Die Scheiben können in einer Portion bspw. übereinander gestapelt angeordnet sein.

Die Übergabeeinrichtung ist ein Robotergreifer oder wenigstens ein Teil eines Robotergreifers. Die Verschwenkeinrichtung ist in den Robotergreifer, bspw. in dessen Greifschaufeln, integriert oder daran angeordnet. Durch Ausnutzung einer Bewegung des Robotergreifers oder des Roboters, an welchem der Greifer angeordnet ist, kann die Verschwenkeinrichtung betätigbar sein, insbesondere derart, dass sie den Abdeckabschnitt um die Knicklinie verschwenkt bzw. faltet. Die Verschwenkeinrichtung kann auch eine Falteinrichtung aufweisen, die, insbesondere auch unabhängig von einer Greiferbewegung, betätigbar ist, bspw. mittels eines pneumatisch betätigbaren Zylinders oder eines anderen Antriebs.

Die Übergabeeinrichtung kann wenigstens eine bewegbare Greifeinrichtung, insbesondere mit einer Schaufel, vorzugsweise mit einem Schaufelblatt, zum zumindest teilweisen Untergreifen zumindest des Abdeckabschnitts des Produktträgers aufweisen. Mittels der wenigstens einen Greifeinrichtung kann der Produktträger erfasst und aufgenommen werden.

Vorzugsweise sind zwei Greifeinrichtungen, insbesondere Schaufeln mit einem jeweiligen Schaufelblatt, vorgesehen, die zum Aufnehmen eines Produktträgers eine Greifbewegung ausführen, bei der sich die Greifeinrichtungen in entgegengesetzten Richtungen aufeinander zubewegen. Die Verschwenkeinrichtung kann an der Greifeinrichtung bzw. an einer der beiden Greifeinrichtungen angeordnet sein. Die Verschwenkeinrichtung kann dadurch in Kontakt mit dem Abdeckabschnitt gebracht werden, insbesondere wenn die Greifeinrichtung den Abdeckabschnitt bestimmungsgemäß untergreift. Dazu ist die Verschwenkeinrichtung vorteilhafterweise an der Seite der Greifeinrichtung angeordnet, bspw. an der Oberseite eines Schaufelblatts, welche sich unterhalb des Abdeckabschnitts befindet, wenn die Greifeinrichtung den Abdeckabschnitt untergreift.

Die Verschwenkeinrichtung kann auch von einem Teil der Greifeinrichtung gebildet werden. Vorteilhafterweise ist dieser Teil so ausgestaltet und angeordnet, dass die Verschwenkeinrichtung in Kontakt mit dem Abdeckabschnitt kommen kann, insbesondere wenn die Greifeinrichtung den Abdeckabschnitt untergreift. Die Verschwenkeinrichtung kann beispielsweise in die Greifeinrichtung integriert sein.

Vorzugsweise ist die Verschwenkeinrichtung mittels einer Bewegung der Greifeinrichtung zum Verschwenken des Abdeckabschnitts betätigbar. Ein eigener Antrieb für die Verschwenkeinrichtung kann somit eingespart werden. Selbstverständlich kann aber auch eine Betätigungseinrichtung, wie etwa ein Antrieb, für die Verschwenkeinrichtung vorgesehen sein. Die Verschwenkeinrichtung kann daher auch unabhängig betätigbar sein.

Nach einer bevorzugten Ausgestaltung der Erfindung weist die Übergabeeinrichtung wenigstens einen, insbesondere auf und ab bewegbaren, Niederhalter zum Niederhalten des Produktes und/oder Fixieren des Produktträgers, insbesondere längs der Knicklinie, auf. Der Produktträger kann somit in seiner Lage fixiert werden, insbesondere während der Abdeckabschnitt verschwenkt wird. Der Niederhalter kann vorzugsweise von oben her kommend auf den Produktträger und bevorzugt auf das darauf liegende Produkt oder neben das Produkt abgesenkt werden. Der Niederhalter kann den Produktträger im Bereich der Knicklinie fixieren. Dazu weist der Niederhalter vorzugsweise eine leistenartige Form auf, deren Breite bevorzugt in etwa der Länge der Knicklinie entspricht.

Die Greifeinrichtung ist vorzugsweise zum Untergreifen des Abdeckabschnitts wenigstens teilweise unter den Abdeckabschnitt des, vorzugsweise auf einer Auflagefläche der Förder- und/oder Bearbeitungseinrichtung liegenden, Produktträgers bewegbar. Die Greifeinrichtung wird daher, insbesondere mittels eines Roboterarms, an dem sie angeordnet ist, zum Produktträger bewegt, um den Abdeckabschnitt aufzunehmen.

Besonders vorteilhaft ist es, wenn die Greifeinrichtung zum Untergreifen des Abdeckabschnitts von der vom Grundabschnitt abgewandten Seite her kommend oder zumindest von einer Seite her in Richtung der Knicklinie kommend unter den Abdeckabschnitt bewegt werden kann, da dann auf einfache Weise mittels der Bewegung der Greifeinrichtung der Abdeckabschnitt verschwenkt werden kann.

Eine weitere, zweite Greifeinrichtung kann zum Untergreifen des Grundabschnitts wenigstens teilweise unter den Grundabschnitt des, vorzugsweise auf der Auflagefläche der Förder- und/oder Bearbeitungseinrichtung liegenden, Produktträgers bewegbar sein, insbesondere von der vom Abdeckabschnitt abgewandten Seite her kommend. Mittels der beiden Greifeinrichtungen kann der Produktträger durch Untergreifen des Grundabschnitts und des Abdeckabschnitts, insbesondere von zwei Seiten her, aufgenommen werden.

Die Verschwenkeinrichtung ist vorzugsweise an der Greifeinrichtung derart angeordnet, dass sie unterhalb des Abdeckabschnitts liegt, wenn die Greifeinrichtung den Abdeckabschnitt wenigstens teilweise untergreift, und dass, zum Verschwenken des Abdeckabschnitts um die Knicklinie, die Verschwenkeinrichtung gegen den Abdeckabschnitt von einer Ausgangsstellung in eine Endstellung verstellbar ist. Die Verschwenkeinrichtung kann daher in Kontakt mit dem Abdeckabschnitt gelangen, wenn die Greifeinrichtung den Abdeckabschnitt untergreift, und durch Verstellen der Verschwenkeinrichtung von der Ausgangsstellung in die Endstellung kann die Verschwenkeinrichtung derart verschwenkt werden, dass sie den Abdeckabschnitt mitnimmt und ihn um die Knicklinie verschwenkt.

Zum Verstellen der Verschwenkeinrichtung von der Ausgangsstellung in die Endstellung und umgekehrt kann die Verschwenkeinrichtung um eine Schwenkachse verschwenkbar sein, die vorzugsweise wenigstens annähernd parallel zur Knicklinie verläuft.

In der Ausgangsstellung liegt die Verschwenkeinrichtung vorzugsweise an der Greifeinrichtung an, während sie zum Erreichen der Endstellung um einen bestimmten Schwenkwinkel gegen den Abdeckabschnitt derart bewegt wird, dass diese den Abdeckabschnitt mitnimmt und ihn dabei um die Knicklinie verschwenkt.

Die Verschwenkeinrichtung kann mit der zweiten Greifeinrichtung gekoppelt und mittels der zweiten Greifeinrichtung betätigbar sein. Durch eine Bewegung der zweiten Greifeinrichtung zur Aufnahme des Produktträgers kann somit die Verschwenkeinrichtung zum Verschwenken des Abdeckabschnitts betätigt werden.

Nach einer bevorzugten Ausgestaltung der Erfindung umfasst die Verschwenkeinrichtung ein Schiebeelement, welches an der Greifeinrichtung derart angeordnet ist, dass es sich vor der vom Grundabschnitt abgewandten Kante des Abdeckabschnitts befindet, wenn die Greifeinrichtung den Abdeckabschnitt wenigstens teilweise untergreift, und dass das Schiebeelement zum Verschwenken des Abdeckabschnitts in Richtung des Abdeckabschnitts, insbesondere mittels einer vorgespannten Feder, bewegbar ist. Mittels des Schiebelements kann der Abdeckabschnitt daher um die Knicklinie verschwenkt werden.

Vorzugsweise ist ein Anschlag für den Abdeckabschnitt, insbesondere oberhalb des Schiebeelements, an der Greifeinrichtung angeordnet, wobei der Anschlag, insbesondere nach dem Zurückbewegen des Schiebeelements in seine Ausgangslage, mittels einer Bewegung der Greifeinrichtung in Richtung des Abdeckabschnitts in Anlage mit dem Abdeckabschnitt bringbar und zum weiteren Verschwenken des Abdeckabschnitts gegen diesen bewegbar ist, insbesondere mittels der Bewegung der Greifeinrichtung. Mittels des Anschlags kann der Abdeckabschnitt beispielsweise in seine vorgesehene Endstellung verschwenkt und in dieser Endstellung gehalten werden, zum Beispiel bis der Produktträger und das Produkt der nachgeordneten Einrichtung zugeführt sind.

Die Übergabeeinrichtung kann wenigstens eine Greifeinrichtung zum Aufnehmen des Produktträgers mitsamt des auf dem Grundabschnitt liegenden Produkts aufweisen, wobei die Greifeinrichtung den Produktträger derart aufnimmt, dass der Abdeckabschnitt frei zugänglich ist, und dass die Greifeinrichtung den Abdeckabschnitt einer Falteinrichtung zuführt, mittels welcher der Abdeckabschnitt um die Knicklinie relativ zum Grundabschnitt verschwenkt wird. Die Verschwenkung des Abdeckabschnitts kann somit durch das Zusammenwirken zwischen Greifeinrichtung und Falteinrichtung bewerkstelligt werden.

Die Greifeinrichtung kann eine Halteeinrichtung aufweisen, mittels der der Grundabschnitt in Auflage mit dem Schaufelblatt gehalten wird. Die Halteeinrichtung kann von wenigstens einem stiftartigen Element gebildet werden, das sich oberhalb der vom Schaufelblatt gebildeten Auflagefläche für den Grundabschnitt und vorzugsweise parallel zu einer Außenkante des Schaufelblatts erstreckt, wobei zwischen der Auflagefläche und dem Element ein Spalt gebildet wird, der in etwa der Dicke des Produktträgers entspricht.

Insbesondere kann vorgesehen sein, dass die Verschwenkung des Abdeckabschnitts durch eine Bewegung der Greifeinrichtung relativ zu der, vorzugsweise starr in einem zugeordneten Arbeitsbereich angeordneten, Falteinrichtung erfolgt, oder dass die Falteinrichtung zusätzlich oder alternativ zu der Greifeinrichtung beweglich ist, um durch eine Relativbewegung zwischen Falteinrichtung und Greifeinrichtung eine Verschwenkung des Abdeckabschnitts zu bewirken. Es kann somit durch Bewegen wenigstens einer der beiden Einrichtungen relativ zu der anderen Einrichtung eine Verschwenkung des Abdeckabschnitts erreicht werden.

Die Verschwenkeinrichtung kann eine Ansaugvorrichtung, insbesondere Unterdruck-Leiste, zum Fixieren und/oder Ansaugen des Produktträgers, insbesondere längs der Knicklinie, umfassen. Durch die Ansaugvorrichtung kann auf einfache, hygienische Weise eine Fixierung des Produktträgers bewerkstelligt werden.

Durch Deaktivieren der Ansaugvorrichtung kann der Produktträger wieder freigegeben werden.

Die Ansaugvorrichtung kann an einer Greifeinrichtung zum teilweisen Untergreifen des Produktträgers angeordnet sein, insbesondere derart, dass die Ansaugvorrichtung zumindest im Wesentlichen unterhalb der Knicklinie angeordnet ist, wenn die Greifeinrichtung den Produktträger bestimmungsgemäß untergreift. Die Ansaugvorrichtung kann somit unmittelbar unterhalb bzw. neben der Knicklinie angeordnet werden, um den Produktträger im Bereich der Knicklinie zu fixieren.

Nach einer bevorzugten Ausgestaltung der Erfindung umfasst die Verschwenkeinrichtung wenigstens eine um eine Schwenkachse verschwenkbare Klappe. Mittels dieser kann eine Verschwenkung des Abdeckabschnitts bewirkt werden.

Vorzugsweise ist die Klappe an einer Greifeinrichtung zum teilweisen Untergreifen des Produktträgers um die Schwenkachse verschwenkbar angeordnet. Wenn die Greifeinrichtung den Produktträger untergreift, kann die Klappe somit in Kontakt mit dem Abdeckabschnitt gelangen, um diesen zu verschwenken.

Die Klappe kann an einer seitlichen Außenkante der Greifeinrichtung und vorzugsweise an der seitlichen Außenkante eines Schaufelblatts verschwenkbar angebracht bzw. angelenkt sein. Der Produktträger kann derart aufgenommen werden, dass dessen Grundabschnitt auf dem Schaufelblatt liegt, während die Klappe sich unter dem Abdeckabschnitt befindet. Durch Verschwenken der Klappe nach oben kann der Abdeckabschnitt mitgenommen und um die Knicklinie verschwenkt werden.

Die Greifeinrichtung kann eine Halteeinrichtung aufweisen, mittels der der Grundabschnitt in Auflage mit dem Schaufelblatt gehalten wird. Die Halteeinrichtung kann von wenigstens einem stiftartigen Element gebildet werden, das sich oberhalb und in Richtung der Schwenkachse über der vom Schaufelblatt gebildeten Auflagefläche für den Grundabschnitt erstreckt, wobei zwischen der Auflagefläche und dem Element ein Spalt gebildet wird, der in etwa der Dicke des Produktträgers entspricht.

Vorzugsweise ist ein Antrieb zum Verschwenken der Klappe vorgesehen, so dass die Klappe unabhängig von einer Bewegung der Greifeinrichtung betätigt werden kann.

Der Antrieb kann an der Greifeinrichtung angeordnet sein, so dass sich der Antrieb in unmittelbarer Nähe zur Klappe befinden kann. Dadurch kann der Antrieb kompakt gehalten werden und ein Übertragungsmechanismus zwischen Antrieb und Klappe kann mit geringem Aufwand realisiert oder vermieden werden.

Die Klappe weist bevorzugt einen Schlitz auf, in welchen der Abdeckabschnitt einfädelbar ist, wobei die Greifeinrichtung derart ansteuerbar ist, dass diese, insbesondere während des Untergreifens des Produktträgers, den Abdeckabschnitt in den Schlitz einfädelt. Der Abdeckabschnitt kann somit von der Klappe sicher erfasst und beim Verschwenken der Klappe mitgenommen werden.

Die Klappe kann nach oben und/oder zur Seite bewegbar sein, um, insbesondere nach dem Verschwenkvorgang, den Abdeckabschnitt freizugeben.

Nach einer bevorzugten Weiterbildung der Erfindung ist zusätzlich zu der wenigstens einen Klappe mit Schlitz wenigstens eine weitere bewegliche, insbesondere verschwenkbare, Klappe an der Greifeinrichtung angeordnet, wobei vorgesehen ist, dass der Abdeckabschnitt mittels der Klappe mit Schlitz bis zu einer Zwischenstellung verschwenkt wird, anschließend die Klappe mit Schlitz nach oben und/oder zur Seite wegbewegt wird, um den Abdeckabschnitt freizugeben, und dass dann der Abdeckabschnitt mittels der weiteren Klappe von der Zwischenstellung in eine Endstellung weiter verschwenkt wird. Der Abdeckabschnitt kann von der weiteren Klappe in der Endstellung gehalten werden, insbesondere solange bis der Produktträger der Verpackungsmaschine übergeben wird.

Nach einer bevorzugten Ausgestaltung der Erfindung kann die Verschwenkeinrichtung eine um eine Drehachse drehbare Andruckeinrichtung, insbesondere Scheibe oder dergleichen, aufweisen, deren Außenumfang in Kontakt mit dem Abdeckabschnitt gebracht werden kann, wobei der Außenumfang eine, insbesondere sichelförmige, Kontur aufweist, mittels welcher durch eine Drehung der Andruckeinrichtung um die Drehachse eine Verschwenkung des Abdeckabschnitts um die Knicklinie bewirkt wird. Die Kontur kann eine Steuerkurve bilden, die in Kontakt mit dem Abdeckabschnitt gebracht und durch Drehen der Andruckeinrichtung am Abdeckabschnitt vorbeigefahren wird, wobei durch die Kontur in Verbindung mit der Drehbewegung der Abdeckabschnitt verschwenkt wird.

Vorzugsweise verläuft die Drehachse exzentrisch zur Mitte der Andruckeinrichtung. Durch die exzentrisch gelagerte Andruckeinrichtung kann mittels Drehen der Andruckeinrichtung eine Schwenkbewegung des Abdeckdeckabschnitts bewirkt werden.

Die Andruckeinrichtung kann mittels einer Bewegung der Greifeinrichtung antreibbar sein. Ein eigener Antrieb für die Andruckeinrichtung ist somit nicht erforderlich. Gleichwohl kann auch ein eigener Antrieb für die Andruckeinrichtung vorgesehen sein.

Die Drehachse kann verstellbar sein. Insbesondere kann die Drehachse während einer Verschwenkung des Abdeckabschnitts verstellbar, vorzugsweise verschiebbar, sein, insbesondere derart, dass die Andruckeinrichtung gegen den Abdeckabschnitt bewegt wird. Dadurch kann der Abdeckabschnitt über einen größeren Bereich verschwenkt werden.

Nach einer Weiterbildung der Erfindung weist die wenigstens eine Greifeinrichtung eine vorzugsweise von einem Schaufelblatt gebildete Auflagefläche für den Produktträger auf, wobei die Auflagefläche eine keilförmig ausgebildete Frontkante aufweist und vorgesehen ist, dass mit der Frontkante voraus der Produktträger untergriffen wird. Wenn mit der Frontkante voraus der Abdeckabschnitt an seiner von der Knicklinie abgewandten Seite untergriffen wird, führt deren Keilform dazu, dass der Abdeckabschnitt angehoben wird. Dadurch kann ein nachfolgender Verschwenkvorgang verbessert werden.

Die Erfindung betrifft auch einen Roboter mit einer erfindungsgemäßen Übergabeeinrichtung, die einen Greifer oder wenigstens einen Teil des Greifers des Roboters bildet. Bei der Übergabeeinrichtung kann es sich somit um wenigstens einen Teil des Roboter-Greifers handelt, mit dem zum Beispiel ein Produktträger mitsamt darauf liegendem Produkt aufgenommen und einer nachgeordneten Verpackungsmaschine zugeführt werden kann. Da durch die Übergabeeinrichtung eine Verschwenkung des Abdeckabschnitts bewirkt wird, insbesondere derart, dass der Abdeckabschnitt das Produkt wenigstens teilweise verdeckt, kann eine vorgeordnete Verschwenkeinrichtung oder eine Verschwenkeinrichtung in der Verpackungsmaschine eingespart werden. Der Produktträger mit darauf liegendem Produkt kann somit mit verschwenktem bzw. gefaltetem Abdeckabschnitt an die Verpackungsmaschine übergeben bzw. direkt in eine Verpackung eingelegt werden.

Die Erfindung betrifft auch eine Förderlinie mit einer erfindungsgemäßen Übergabeeinrichtung und/oder einem erfindungsgemäßen Roboter, wobei die Übergabeeinrichtung in Förderrichtung gesehen zwischen der Förder- und/oder Bearbeitungseinrichtung und der Verpackungsmaschine angeordnet ist, und/oder wobei der Roboter zum Übertragen, mittels der Übergabeeinrichtung, eines Produktträgers mit darauf liegendem Produkt von der Förder- und/oder Bearbeitungseinrichtung zu der Verpackungsmaschine ausgebildet ist.

Bei der erfindungsgemäßen Übergabeeinrichtung kann der Kontakt einer Greifeinrichtung mit z.B. einer Unterlage genutzt werden, um aus der Bewegung der Greifeinrichtung Energie in die Greifeinrichtung einzuspeichern, die für den Faltvorgang bzw. eine Falteinrichtung genutzt werden kann.

Beim Aufsetzen der Greifeinrichtung auf die Unterlage wird z. B. eine Falt- bzw. Verschwenkeinrichtung in eine Ausgangslage gebracht, insbesondere vorgespannt, vorgeformt, fixiert und/oder eingerastet, zum Beispiel mittels Federvorspannung, Tastrolle und/oder Einfedern der Greifeinrichtung, insbesondere Schaufel. Außerdem könnten Faltbleche und Klappen usw. zurück in eine Ausgangsposition gebracht werden, wenn der Verfahrweg einer Greifeinrichtung dafür nicht ausreicht. Ein Anheben der Greifeinrichtung kann zu einem Faltvorgang führen, entweder einem vollständigen oder teilweisen Faltvorgang, da die frei werdende Bewegungsenergie genutzt werden kann. Alternativ oder ergänzend könnte eine erste Öffnungsbewegung oder eine Drehbewegung der Greifeinrichtung zur Basis das Falten durch Lösen der Vorspannung auslösen. Ein Mechanismus zur Energiespeicherung kann dann entspannt sein. Dieser könnte beim nächsten Greifer-Hub vorgespannt werden.

Die Erfindung betrifft außerdem ein Verfahren zur Handhabung von Produkten, insbesondere von Portionen, die eine oder mehrere von einem Lebensmittel wie z.B. einem Wurst- oder Käselaib abgetrennte Scheiben umfassen, bei dem wenigstens ein Produkt auf einen Grundabschnitt eines Produktträgers gelegt wird, der einen mit dem Grundabschnitt zusammenhängenden Abdeckabschnitt umfasst, der Produktträger auf einer Unterlage, insbesondere auf einer Übergabeeinrichtung, bevorzugt wie hierin offenbar, fixiert wird, und der Abdeckabschnitt verschwenkt wird, insbesondere durch Hochstellen und Umlegen in Richtung des Produkts.

Das Fixieren des Produktträgers auf der Unterlage kann z.B. durch einen Niederhalter oder durch Beaufschlagen mit Unterdruck erfolgen.

Das Verschwenken des Abdeckabschnitts kann beispielsweise durch Bewegungen einer oder mehrerer Komponenten einer Übergabeeinrichtung erfolgen, z.B. durch Bewegen der Schaufeln eines Robotergreifers. Alternativ kann das Verschwenken durch ein zusätzliches Knickelement oder eine zusätzliche Knickvorrichtung erfolgen.

Der verschwenkte Abdeckabschnitt kann zusätzlich fixiert werden.

Die Erfindung betrifft ferner ein Verfahren zur Handhabung von Produkten, insbesondere von Portionen, die eine oder mehrere von einem Lebensmittel wie z.B. einem Wurst- oder Käselaib abgetrennte Scheiben umfassen, bei dem ein Produktträger, der einen Grundabschnitt und einen mit dem Grundabschnitt zusammenhängenden Abdeckabschnitt umfasst und der dazu dient, wenigstens ein auf dem Grundabschnitt aufliegendes Produkt zu tragen, auf einer Unterlage fixiert wird, der Abdeckabschnitt auf ein aufliegendes Produkt verschwenkt wird, mittels einer Niederhalters der Produktträger zusammen mit dem zwischen Grundabschnitt und Abdeckabschnitt fixiertem Produkt bezüglich der Unterlage fixiert wird, und der Produktträger zusammen mit dem Produkt mittels einer zwischen Unterlage und Grundabschnitt greifenden Übergabeeinrichtung, bevorzugt wie hierin offenbart, aufgenommen wird.

Bei diesen Verfahren kann jeweils eine, insbesondere für einen Übergabevorgang dauerhafte, Fixierung des Produktes durch den Produktträger erfolgen, insbesondere mittels des verschwenkten Abdeckabschnitts. Diese Fixierung kann z.B. mittels einer Schnappeinrichtung, mittels separater Fixierhilfsmittel oder mittels eines Bandes erfolgen.

Die hierin offenbarten Aspekte der Vorrichtung und die hierin offenbarten Aspekte der Verfahren können grundsätzlich beliebig miteinander kombiniert werden. Insbesondere können für die Aspekte der Verfahren die entsprechenden hierin offenbarten Vorrichtungsmittel verwendet werden. Mit anderen Worten können die offenbarten Verfahrensschritte jeweils mit den entsprechenden hierzu geeigneten Vorrichtungen bzw. Komponenten durchgeführt werden.

Die Erfindung wird im Folgenden anhand von bevorzugten Ausführungsformen beispielhaft erläutert. Es zeigen, jeweils schematisch,
- Fig. 1 bis 3: seitliche Ansichten einer Variante einer erfindungsgemäßen Übergabeeinrichtung,
- Fig. 4: eine seitliche Ansicht einer weiteren Variante einer erfindungsgemäßen Übergabeeinrichtung,
- Fig. 5: eine seitliche Teilansicht einer Abwandlung zu der Variante der Fig. 4,
- Fig. 6: eine Draufsicht auf eine beispielhafte Verschwenkeinrichtung der Übergabeeinrichtungen der Fig. 1 bis 5,
- Fig. 7: eine seitliche Ansicht einer weiteren Variante einer erfindungsgemäßen Übergabeeinrichtung,
- Fig. 8: eine seitliche Ansicht einer weiteren Variante einer erfindungsgemäßen Übergabeeinrichtung,
- Fig. 9: eine Draufsicht auf die Variante der Fig. 8,
- Fig. 10: Ansichten einer Falteinrichtung der Variante der Fig. 8,
- Fig. 11: eine weitere Variante einer erfindungsgemäßen Übergabeeinrichtung,
- Fig. 12: eine seitliche Ansicht einer weiteren Variante einer erfindungsgemäßen Übergabeeinrichtung,
- Fig. 13: eine Draufsicht auf die Übergabeeinrichtung von Fig. 12,
- Fig. 14: eine seitliche Ansicht einer weiteren Variante einer erfindungsgemäßen Übergabeeinrichtung,
- Fig. 15: eine seitliche Ansicht einer weiteren Variante einer erfindungsgemäßen Übergabeeinrichtung,
- Fig. 16: eine seitliche Teilansicht einer weiteren Variante einer erfindungsgemäßen Übergabeeinrichtung,
- Fig. 17: eine seitliche Teilansicht einer weiteren Variante einer erfindungsgemäßen Übergabeeinrichtung,
- Fig. 18: eine seitliche Ansicht einer weiteren Variante einer erfindungsgemäßen Übergabeeinrichtung,
- Fig. 19: eine seitliche Teilansicht einer weiteren Variante einer erfindungsgemäßen Übergabeeinrichtung,
- Fig. 20: eine weitere seitliche Teilansicht der Vorrichtung von Fig. 19,
- Fig. 21: eine seitliche Teilansicht einer weiteren Variante einer erfindungsgemäßen Übergabeeinrichtung,
- Fig. 22: eine weitere seitliche Teilansicht der Vorrichtung von Fig. 21,
- Fig. 23: eine Draufsicht auf eine weitere Variante einer erfindungsgemäßen Übergabeeinrichtung, und
- Fig. 24: eine Abwandlung zu der Variante der Fig. 23.

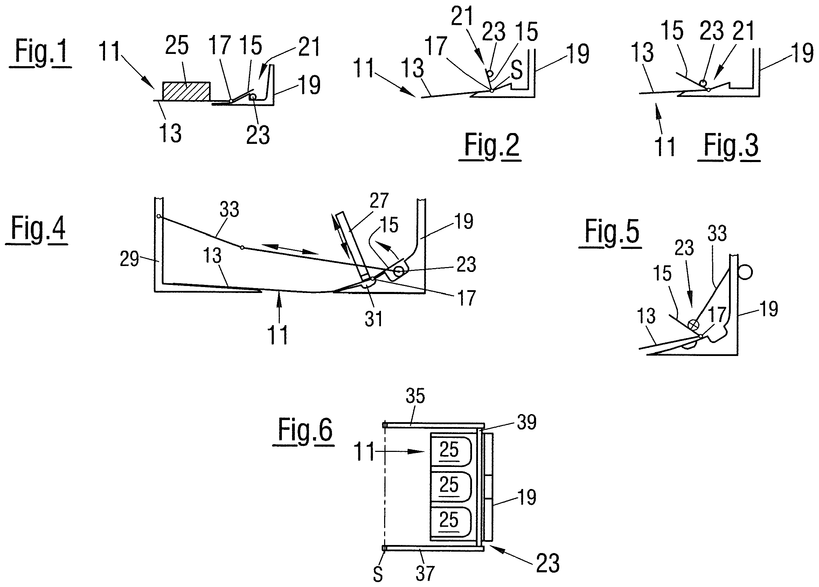

Die Fig. 1 bis 3 zeigen eine Übergabeeinrichtung, bei der es sich insbesondere um einen Teil eines Robotergreifers handelt, zur Aufnahme eines auf einem Grundabschnitt 13 eines Produktträgers 11 liegenden Produkts 25 mitsamt des Produktträgers 11. Der Produktträger 11 kann mit dem darauf liegenden Produkt 25 beispielsweise von einer nicht dargestellten Förder- und/oder Bearbeitungseinrichtung für das Produkt 25 und/oder für den Produktträger 11 bereitgestellt werden.

Bei einer derartigen Förder- und/oder Bearbeitungseinrichtung kann es sich beispielsweise um eine Lebensmittelaufschneidemaschine, die auch als Hochleistungsslicer, bezeichnet wird, handeln, der eine Einrichtung zur Bereitstellung der Produktträger 11 und zum Auflegen eines jeweiligen Produkts 25 auf den Grundabschnitt 13 eines Produktträgers 11 nachgeordnet ist.

Bei dem Lebensmittelprodukt kann es sich um eine Scheibe eines Lebensmittelprodukts, wie etwa Wurst, Fleisch oder Käse, oder auch um eine aus mehreren Scheiben bestehende, beispielsweise gestapelte, Portion eines Lebensmittelprodukts handeln. Die Scheibe bzw. Portion kann beispielsweise mittels eines Hochleistungsslicers erzeugt werden.

Die mit der Übergabeeinrichtung der Fig. 1 bis 3 aufgenommene Kombination aus Produktträger 11 und Produkt 25 kann mittels der Übergabeeinrichtung einer Verpackungsmaschine zugeführt werden und beispielsweise direkt von der Übergabeeinrichtung in eine Verpackung eingelegt werden (nicht dargestellt).

Wie die Fig. 1 bis 3 zeigen, weist die Übergabeeinrichtung eine in Form einer Schaufel bewegbare Greifeinrichtung 19 auf, die den Abdeckabschnitt 15 des Produktträgers 11 zumindest teilweise untergreifen kann. An der Greifeinrichtung 19 ist eine Verschwenkeinrichtung 21 angeordnet, die bei der Variante der Fig. 1 bis 3 einen verschwenkbaren Bügel 23 umfasst, der auf der Oberseite der schaufelartigen Greifeinrichtung 19 angeordnet ist, so dass dieser sich unterhalb des Abdeckabschnitts 15 befindet, wenn die Greifeinrichtung 19 diesen untergreift.

Der Bügel 23 ist um eine Schwenkachse S verschwenkbar an der erwähnten Oberseite der Greifeinrichtung 19 angelenkt. Durch Verschwenken des Bügels 23 von seiner in Fig. 1 dargestellten Ausgangslage in die in Fig. 3 dargestellte Endlage wird der Abdeckabschnitt 15 des Produktträgers 11 um eine zwischen dem Abdeckabschnitt 15 und dem Grundabschnitt 13 verlaufende Knicklinie 17 verschwenkt.

Besonders einfach kann eine Verschwenkung des Abdeckabschnitts 15 mittels einer Verschwenkung des Bügels 23 dadurch erreicht werden, dass die Greifeinrichtung 19 von der vom Grundabschnitt 13 abgewandten Seite her kommend den Abdeckabschnitt 15 untergreift und die Schwenkachse S des Bügels 23 zumindest im Wesentlichen parallel zur Knicklinie 17 ausgerichtet wird. Der Bügel 23 kann sodann von seiner in Fig. 1 gezeigten Ausgangsstellung nach oben in seine in Fig. 3 dargestellte Endstellung bewegt werden. Dabei nimmt der Bügel 23 den Abdeckabschnitt 15 mit und verschwenkt diesen um die Knicklinie 17.

Zum Bewegen des Bügels 23 von seiner Ausgangsstellung in seine Endstellung kann ein Betätigungsmechanismus vorgesehen sein. Dieser Betätigungsmechanismus kann einen Halter umfassen, der den Bügel 23 in seiner Ausgangsstellung hält. Außerdem kann der Bügel 23 mittels einer Feder in der Ausgangsstellung in Richtung der Endstellung vorgespannt sein. Der Halter kann den Bügel 23 freigeben, wodurch der Bügel 23 aufgrund der Vorspannung von der Ausgangslage in die Endlage bewegt wird.

Es kann auch vorgesehen sein, dass die Verschwenkeinrichtung 21 bzw. der Bügel 23 mittels einer Bewegung der Greifeinrichtung 19, die unter den Produktträger 11 bewegt wird, betätigt werden kann, um den Abdeckabschnitt 15 zu verschwenken. Auch eine Rückführung des Bügels 23 in seine Ausgangsstellung kann durch eine Bewegung der Greifeinrichtung 19 oder unabhängig von einer Bewegung der Greifeinrichtung 19, beispielsweise mittels einer dafür vorgesehenen Rückstelleinrichtung, bewerkstelligt werden.

Die Fig. 4 zeigt eine abgewandelte Variante zu der mit Bezug auf die Fig. 1 bis 3 dargestellten Übergabeeinrichtung. Die Übergabeeinrichtung der Fig. 4 weist zusätzlich zu der ersten Greifeinrichtung 19 eine weitere, zweite Greifeinrichtung 29 auf. Die beiden Greifeinrichtungen 19, 29 können schaufelartig ausgebildet sein und zum Aufnehmen bzw. Untergreifen eines Produktträgers 11 mit einem auf dem Grundabschnitt 13 des Produktträgers 11 aufliegenden Produkt von einander gegenüberliegenden Seiten her kommend aufeinander zu bewegt werden. Insbesondere ist vorgesehen, dass die erste Greifeinrichtung 19 zum Untergreifen des Abdeckabschnitts 15 von der vom Grundabschnitt 13 abgewandten Seite her kommend unter den Abdeckabschnitt 15 bewegt wird, während die zweite Greifeinrichtung 29 zum Untergreifen des Grundabschnitts 13 von der vom Abdeckabschnitt 15 abgewandten Seite her kommend zumindest teilweise unter den Grundabschnitt 13 bewegt wird.

Außerdem ist ein Niederhalter 27 vorgesehen, der von oben her in Kontakt mit dem Produktträger 11 gebracht werden kann, um diesen zu fixieren. Dabei gelangt der Niederhalter 27 vorzugsweise im Bereich der Knicklinie 17 in Kontakt mit dem Produktträger 11. Unterhalb des Niederhalters 27 ist in dem die Greifeinrichtung 19 bildenden Schaufelblatt eine Nut 31 angebracht, die in Kombination mit dem Niederhalter 27 eine Verschwenkung des Abdeckabschnitts 15 um die Knicklinie 17 unterstützt. Der Niederhalter 27 kann während des Verschwenkvorgangs des Abdeckabschnitts 15 wieder nach oben weggefahren werden, um keine Blockierung der Verschwenkbewegung zu verursachen.

Bei der Variante der Fig. 4 ist der Bügel 23 über eine Kopplungseinrichtung 33 mit der zweiten Greifeinrichtung 29 gekoppelt. Die Kopplungseinrichtung 33 ist derart ausgestaltet, dass durch eine Bewegung der zweiten Greifeinrichtung 29, insbesondere in Richtung der ersten Greifeinrichtung 19, der Bügel 23 von seiner in Fig. 4 dargestellten Ausgangsstellung zum Verschwenken des Abdeckabschnitts 15 um die Knicklinie 17 in eine Endstellung (vgl. Fig. 3), die in Bezug auf die Variante der Fig. 4 nicht dargestellt ist, bewegt werden kann.

Die Fig. 5 zeigt eine abgewandelte Variante einer Übergabeeinrichtung, bei der der Bügel 23 über eine mit der ersten Greifeinrichtung 19 gekoppelte Kopplungseinrichtung 33 betätigt wird. Durch eine Bewegung des ersten Bügels 19 in Richtung des zweiten Bügels 23 kann somit mittels der Kopplungseinrichtung 33 der Faltbügel 23 von seiner Ausgangsstellung in seine in Fig. 5 dargestellte Endstellung gebracht und dadurch der Abdeckabschnitt 15 um die Knicklinie 17 verschwenkt werden.

Die Fig. 6 zeigt eine Draufsicht auf eine einen Produktträger 11 untergreifende Greifeinrichtung 19 zur Illustration einer möglichen Ausgestaltung des Bügels 23. Wie dargestellt, kann der Bügel zwei voneinander beabstandete Bügelarme 35, 37 aufweisen, wobei jeweils ein Ende jedes Bügelarms 35, 37 um die Schwenkachse S verschwenkbar an der Greifeinrichtung 19 angeordnet ist. Die von der Schwenkachse S abgewandten Enden der Bügelarme 35, 37 sind über einen weiteren Bügelarm 39 miteinander verbunden.

Wie die Fig. 1 bis 5 außerdem zeigen, weist die schaufelartige Oberseite der Greifeinrichtung 19 eine von der jeweiligen Frontkante ausgehende ansteigende Schräge auf, hinter der der Bügel 23, insbesondere der in Fig. 6 gezeigte Bügelarm 39, angeordnet ist. Durch die Schräge erfolgt ein wenigstens leichtes Anheben des Abdeckabschnitts 15, wenn die Greifeinrichtung 19 unter den Abdeckabschnitt 15 bewegt wird.

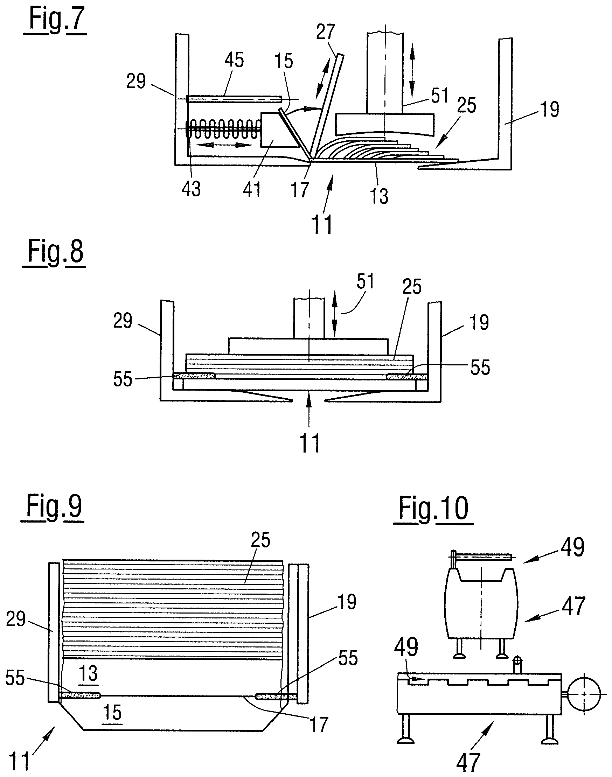

Fig. 7 zeigt eine andere Variante einer Übergabeeinrichtung, bei der es sich insbesondere wiederum um einen Robotergreifer handelt, zur Aufnahme wenigstens eines auf einem Grundabschnitt 13 eines Produktträgers 11 liegenden Produkts 25 und des Produktträgers 11. Die Übergabeeinrichtung umfasst wiederum eine erste Greifeinrichtung 19 sowie eine zweite Greifeinrichtung 29, die in Art von Greifschaufeln ausgebildet sind. Die Greifeinrichtungen 19 und 29 können aufeinander zu bewegt werden und dabei den Produktträger 11 untergreifen. Wie dargestellt, untergreifen die Greifeinrichtungen 19, 29 den Produktträger 11 vorzugsweise derart, dass die zweite Greifeinrichtung 19 von der vom Grundabschnitt 13 abgewandten Seite her kommend den Abdeckabschnitt 15 untergreift, während die erste Greifeinrichtung 19 den Grundabschnitt 13 untergreift, und zwar von der vom Abdeckabschnitt 15 abgewandten Seite her kommend. Die zweite Greifeinrichtung 29 weist ein Schiebelement 41 auf, welches derart an der Greifeinrichtung 29 angeordnet ist, dass es sich vor der vom Grundabschnitt 13 abgewandten Kante des Abdeckabschnitts 15 befindet, wenn die Greifeinrichtung 29 den Abdeckabschnitt 15 wenigstens teilweise untergreift. Das Schiebeelement 41 kann in Richtung des Abdeckabschnitts 15 bewegt werden, wodurch es in Kontakt mit dem Abdeckabschnitt 15 gelangt und diesen, wie in Fig. 7 dargestellt ist, verschwenkt. Dazu ist das Schiebeelement 41 mittels einer Feder 43 in Richtung des Abdeckabschnitts vorgespannt, so dass das Schiebeelement 41 von einer nicht dargestellten Ausgangsstellung in eine nicht dargestellte Endstellung zum Verschwenken des Abdeckabschnitts 15 bewegt werden kann. Die Feder 43 ist an einer seitlichen Wand der Greifeinrichtung 29 abgestützt.

An der seitlichen Wand der Greifeinrichtung 29 kann außerdem ein Anschlag 45 für den Abdeckabschnitt 15 angeordnet sein. Der Anschlag 45 kann insbesondere in Form eines Stifts oder einer Platte ausgebildet sein, die sich von der Seitenwand zumindest im Wesentlichen parallel zu der den Abdeckabschnitt 15 untergreifenden Schaufel erstreckt. Der Anschlag 45 befindet sich dabei oberhalb des Schiebeelements 41, wie Fig. 7 zeigt. Der Anschlag 45 kann mit dem Abdeckabschnitt 15 in Kontakt gebracht werden, insbesondere nachdem der Abdeckabschnitt 15 mittels des Schiebeelements 41 um etwa 90° nach oben verschwenkt wurde. Der Anschlag 45 wird vorzugsweise nach dem Zurückbewegen des Schiebeelements 41 in seine Ausgangslage mittels einer Bewegung der Greifeinrichtung 29 in Richtung des Abdeckabschnitts 15 in Anlage mit dem Abdeckabschnitt 15 gebracht und zum weiteren Verschwenken des Abdeckabschnitts 15 gegen diesen bewegt.

Vor dem Bewegen der Greifeinrichtung 29 in Richtung des Abdeckabschnitts 15 kann ein Niederhalter 27, der den Produktträger 11 im Bereich der Knicklinie 17 fixiert, nach oben weggefahren werden, um eine weitere Verschwenkung des Abdeckabschnitts 15 mittels des Anschlags 45 nicht zu blockieren.

Wie die Fig. 7 zeigt, kann zum Fixieren des Produkts 25 auf dem Produktträger 11 außerdem ein weiterer Niederhalter 51 vorgesehen sein, der auf und ab bewegbar ist und von oben her kommend zur Fixierung des Produkts 25 und des Produktträgers 11 auf das Produkt 25 abgesenkt ist. Der Niederhalter 51 kann, wie auch der Niederhalter 27, in die Übergabeeinrichtung integriert sein. Die Niederhalter 27, 51 können beispielweise zusammen mit den Greifeinrichtungen 19, 29 und der aufgenommenen Kombination aus Produkt 25 und Produktträger 11 mitbewegt werden, insbesondere um die aufgenommene Kombination in einer Verpackung abzulegen.

Die Höhe des Anschlags 45, also dessen Abstand zur Schaufeloberseite, kann verstellbar sein. Außerdem können die beiden Greifeinrichtungen 19, 29 eine Art asymmetrische Greifbewegung ausführen. Dabei führen die Greifeinrichtungen 19, 29 unterschiedliche Schließbewegungen aus und/oder legen unterschiedlich lange Wege zum Aufnehmen der Kombination aus Produkt 25 und Produktträger 11 zurück.

Die Fig. 8 und 9 zeigen eine Übergabeeinrichtung, die ebenfalls als Robotergreifer ausgebildet ist, und die zwei Greifeinrichtungen 19, 29 zum Aufnehmen eines Produktträgers 11 mit einem auf dem Grundabschnitt 15 des Produktträgers 11 liegenden Produkt 25 aufweist. Die beiden Greifeinrichtungen 19, 29 können so aufeinander zu bewegt werden, dass der Produktträger 11 mit dem darauf liegenden Produkt 25 zwischen den beiden Greifeinrichtungen 19, 29 ergriffen werden kann. Dabei ist vorgesehen, dass die beiden Greifeinrichtungen 19, 29 den Produktträger 11 im Bereich des Grundabschnitts 13 erfassen, so dass der Abdeckabschnitt 15 frei zugänglich ist.

Die Greifeinrichtungen 19, 29 können so bewegt werden, dass sie den Abdeckabschnitt 15 einer schematisch in Fig. 10 gezeigten Falteinrichtung 47 zuführen. Die Falteinrichtung 47 weist eine Aufnahme 49 auf, in welche der Abdeckabschnitt 15 eingeführt werden kann. Durch eine Bewegung der Greifeinrichtungen 19, 29 relativ zu der starren Falteinrichtung 47 kann der Abdeckabschnitt 15 um die Knicklinie 17 relativ zum Grundabschnitt 13 verschwenkt werden.

Bei einer nicht dargestellten Abwandlung der Falteinrichtung 47 kann die Aufnahme 49 beweglich angeordnet sein, so dass die Aufnahme 49 zusätzlich oder alternativ zu den Greifeinrichtungen 19, 29 bewegt werden kann, um den Abdeckabschnitts 15 zu verschwenken.

Die Übergabeeinrichtung der Fig. 8 und 9 kann einen, zum Beispiel in Form eines Stempels, ausgebildeten Niederhalter 51 aufweisen, der auf und ab bewegbar ist, um das Produkt 25 und den Produkthalter 11 zu fixieren.

Die Greifeinrichtungen 19, 29 weisen eine jeweilige Halteeinrichtung 55 auf, mittels der der Grundabschnitt 13 in Auflage mit dem Schaufelblatt der jeweiligen Greifeinrichtung 19, 29 gehalten werden kann. Die Halteeinrichtung 55 wird von einem stiftartigen Element gebildet, das sich oberhalb des Schaufelblatts und parallel zu dessen Außenkante erstreckt. Zwischen der vom Schaufelblatt gebildeten Auflagefläche und dem Element ist ein Spalt ausgebildet, der in etwa der Dicke des Produktträgers 11 entspricht und in den der Produktträger 11 eingefädelt werden kann, während er von den Greifeinrichtungen 19, 29 untergriffen wird.

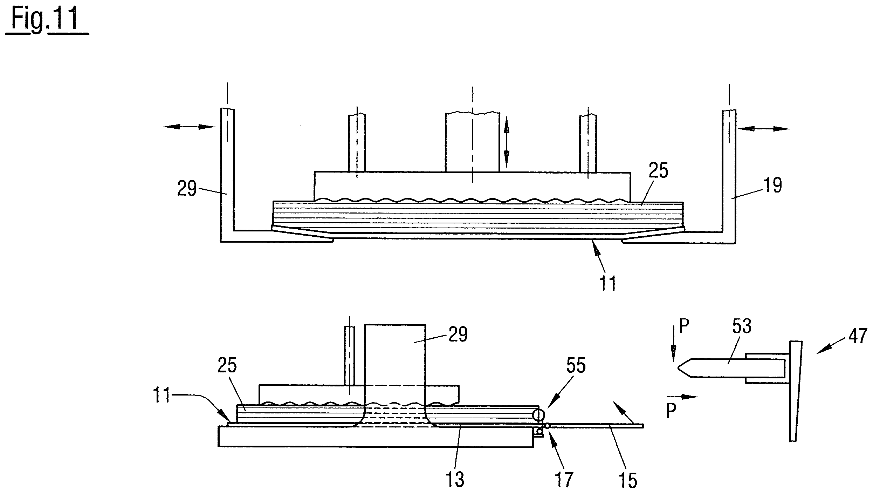

Die Fig. 11 zeigt eine gegenüber der Vorrichtung der Fig. 8 und 9 abgewandelte Übergabeeinrichtung mit den Greifeinrichtungen 19 und 29, die einen Produktträger 11 mit einem darauf liegenden Produkt 25 derart erfassen können, dass der Abdeckabschnitt 15 des Produktträgers 11 frei zugänglich ist. Außerdem zeigt die Fig. 11 eine abgewandelte Falteinrichtung 47, die einen Anschlag 53 umfasst, an welchem der Abdeckabschnitt 15 vorbeigeführt wird. Insbesondere fährt die Übergabeeinrichtung den durch die Pfeile P angezeigten Weg ab. Der Abdeckabschnitt 15 wird somit von oben her kommend in Kontakt mit dem Anschlag 53 gebracht und nach oben verschwenkt. Wenn der Grundabschnitt 13 des Produktträgers 11 unterhalb des Anschlags 53 liegt, bewegen sich die Greifeinrichtungen 19 und 29 in horizontaler Richtung, wie durch den unteren, horizontal verlaufenden Pfeil P angedeutet ist. Dadurch erfolgt eine weitere Verschwenkung des Abdeckabschnitts 15 durch den Anschlag 53.

Die Übergabeeinrichtung kann an der Vorderkante jeder Greifeinrichtung 19, 29, längs der sich zumindest im Wesentlichen die Knicklinie 17 eines aufgenommenen Produktträgers 11 erstreckt, wiederum eine Halteeinrichtung 55 aufweisen, die den Produktträger im Bereich der Knicklinie 17 fixiert. Dadurch wird in besonders vorteilhafter Weise eine Verschwenkung um die Knicklinie 17 sichergestellt.

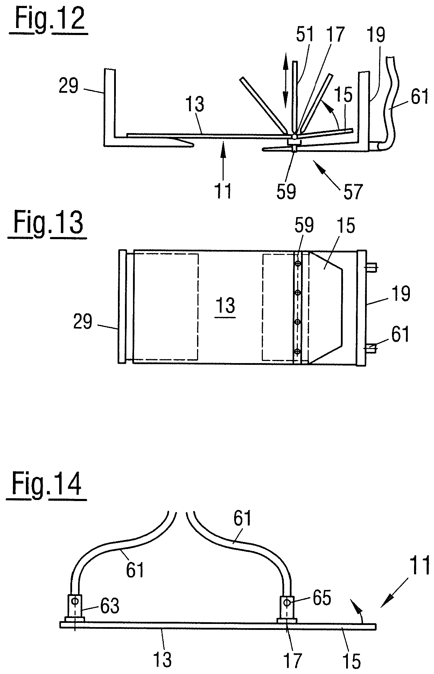

Die Fig. 12 und 13 zeigen eine weitere Variante einer Übergabeeinrichtung mit zwei bewegbaren Greifeinrichtungen 19, 29, die einen Produktträger 11 mit einem darauf liegenden Produkt 25 aufnehmen können. Dabei untergreifen die beiden Greifeinrichtungen 19, 29 jeweils den Produktträger 11. Die Greifeinrichtung 19 weist eine Ansaugvorrichtung 57 auf, die eine Saugleiste 59 umfasst, welche in die Oberseite der den Produktträger 11 untergreifenden Schaufel der Greifeinrichtung 19 integriert ist. Zur Erzeugung eines Unterdrucks in der Saugleiste 59 ist ein Schlauch 61 von der Saugleiste 59 weggeführt, über den die Saugleiste 59 mit einer Pumpe oder dergleichen zur Erzeugung des Unterdrucks verbunden ist.

Die Saugleiste 59 ist vorzugsweise derart in die Oberseite der Schaufel integriert, dass sie sich zumindest im Wesentlichen unterhalb der Knicklinie 17 befindet, wenn die Greifeinrichtung 19 den Produktträger 11 untergreift. Mittels der Unterdruckleiste 59 kann der Produktträger 11 angesaugt und insbesondere im Bereich der Knicklinie 17 fixiert werden. Zur Fixierung des Produktträgers 11 kann ferner noch der Niederhalter 51 von oben her auf den Produktträger 11 wirken.

Über eine nicht dargestellte Verschwenkeinrichtung, wie beispielsweise über einen mit Bezug auf die Fig. 1 bis 3 beschriebenen Bügel 23, kann eine Verschwenkung des Abdeckabschnitts 15 bewirkt werden.

Die Fig. 14 zeigt eine Übergabeeinrichtung mit zwei Saugnäpfen 63, 65, die über einen jeweiligen Schlauch 61 mit einer Unterdruckerzeugungseinrichtung, wie beispielsweise einer Pumpe, verbunden sind (nicht gezeigt). Die Saugnäpfe 63, 65 können, insbesondere unabhängig voneinander, bewegt werden, um einen Produktträger 11 aufzunehmen. Insbesondere können die Saugnäpfe 63, 65 am Grundabschnitt 13 angeordnet werden und somit durch Erzeugung eines Unterdrucks den Grundabschnitt 13 ansaugen, wobei vorzugsweise der Abdeckabschnitt 15 freiliegt. Der fixierte Produktträger 11 kann zum Beispiel wie vorstehend mit Bezug auf die Fig. 10 und 11 beschrieben wurde, mittels einer Falteinrichtung 47 verschwenkt werden.

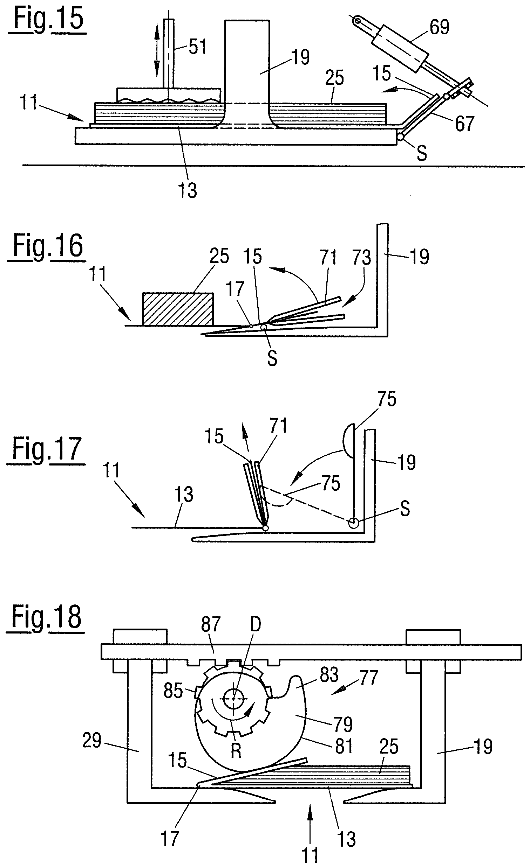

Fig. 15 zeigt eine Übergabeeinrichtung mit vorzugsweise zwei Greifeinrichtungen 19, 29, die wie vorstehend zum Beispiel mit Bezug auf die Fig. 8 und 9 beschrieben wurde, einen Produkthalter 11 mit einem auf dem Grundabschnitt 13 des Produktträgers 11 liegenden Produkt 25 aufnehmen können. Zum Fixieren des Produkts 25 und des Produkthalters 11 ist ein von oben absenkbarer Niederhalter 51 vorgesehen. Die Greifeinrichtungen 19, 29 nehmen den Produkthalter 11 derart auf, dass der Abdeckabschnitt 15 des Produkthalters 11 oberhalb einer Klappe 67 angeordnet ist. Die Klappe 67 ist an wenigstens einer der Greifeinrichtungen 19, 29 um eine Schwenkachse S verschwenkbar angeordnet. Die Klappe 67 kann zum Beispiel aus einem Blech oder aus Kunststoff ausgebildet sein. Die Klappe 67 ist mit einem Antrieb 69 gekoppelt, welcher an der Greifeinrichtung 19 angeordnet ist und mittels dem die Klappe 67 um die Schwenkachse S verschwenkt werden kann. Der Antrieb 69 weist vorzugsweise einen Pneumatikzylinder mit einem pneumatisch betätigbaren Kolben auf, wobei durch Verfahren des Kolbens eine Verschwenkung der Klappe 67 erreicht werden kann. Dieses Verschwenken ist eine bezüglich Position und Bewegung der Greifeinrichtung 19, 29 vollkommen unabhängige Bewegung.

Die Fig. 16 zeigt eine Übergabeeinrichtung zum Aufnehmen eines Produktträgers 11 mit einem darauf liegenden Produkt 25, welche ebenfalls wiederum zumindest eine bewegbare Greifeinrichtung 19 aufweist, die zum zumindest teilweisen Untergreifen zumindest des Abdeckabschnitts 15 des Produktträgers 11 ausgebildet ist. Die Greifeinrichtung 19 umfasst wiederum ein Schaufelblatt, welches unter den Abdeckabschnitt 15 gebracht werden kann. Auf der Oberseite des Schaufelblatts ist eine Klappe 71 mit einem Schlitz 73 angeordnet, in welchen der Abdeckabschnitt 15 beim Untergreifen des Abdeckabschnitts 15 durch das Schaufelblatt eingefädelt werden kann. Die Klappe 71 ist um eine Schwenkachse S verschwenkbar, so dass durch Verschwenken der Klappe 17 um die Schwenkachse S eine Verschwenkung des Abdeckabschnitts 15 um die Knicklinie 17 erreicht werden kann. Nach dem Verschwenken des Abdeckabschnitts 15 kann die Klappe 71 nach oben und/oder zur Seite bewegt werden, um den Abdeckabschnitt 15 freizugeben. Anschließend kann der Abdeckabschnitt 15 mittels einer weiteren Falteinrichtung, die in Fig. 16 nicht dargestellt ist, weitergeschwenkt und somit "fertig" gefaltet werden.

Alternativ zu der Klappe 71 können zwei geschlitzte Faltleisten den Abdeckabschnitt 15 von der Seite her erfassen und verschwenken. Nach Abschluss der Faltung können die Faltleisten wieder zur Seite bewegt werden, um den Abdeckabschnitt 15 freizugeben (nicht gezeigt).

Fig. 17 zeigt eine abgewandelte Variante zu der Vorrichtung der Fig. 16. Bei der Übergabeeinrichtung gemäß Fig. 17 ist eine um eine weitere Schwenkachse S verschwenkbare Andrück-Klappe 75 vorgesehen, welche - nachdem die Klappe 71 nach oben weggefahren wurde - um die Schwenkachse S verschwenkt werden kann, um den Abdeckabschnitt 15 weiter zu falten.

Die in Fig. 18 gezeigte Übergabeeinrichtung umfasst zwei Greifeinrichtungen 19, 29, welche einen Produktträger 11 mit einem darauf liegenden Produkt 25 aufnehmen können. Die Greifeinrichtungen 19, 29 weisen wiederum jeweils ein Schaufelblatt auf, das von der Seite her unter den Abdeckabschnitt 15 bzw. den Grundabschnitt 13 gebracht werden kann. Zum Verschwenken des Abdeckabschnitts 15 um die Knicklinie 17 ist eine Verschwenkeinrichtung 77 vorgesehen, welche eine um eine Drehachse D drehbare Andruckeinrichtung 79 aufweist, die bei der Variante der Fig. 18 in Art einer sichelförmigen Scheibe ausgebildet ist. Die Andruckeinrichtung 79 weist an ihrem Außenumfang eine sichelförmige Kontur 81 und eine hakenartige Auskragung 83 auf, die in Drehrichtung R gesehen vor der sichelförmigen Kontur 81 liegt.

Die sich drehende Andruckeinrichtung 79 kann in Kontakt mit dem, z.B. durch die keilförmige Kontur der Greifeinrichtung 29, bereits leicht verschwenkten Abdeckabschnitt 15 gebracht werden. Dabei kann insbesondere die Auskragung 83 den Abdeckabschnitt 15 erfassen. Durch die weitere Drehbewegung, bei der die sichelförmige Kontur 81 am Abdeckabschnitt 15 gleitend vorbeibewegt wird, wird der Abdeckabschnitt 15, wie in Fig. 18 dargestellt ist, verschwenkt. Zum Falten des Abdeckabschnitts 15 hakt die Auskragung 83 an der Kante des Abdeckabschnitts 15 ein und zieht diesen hoch. Die sichelförmige Außenkontur 81 wird anschließend an der zuvor nach unten weisenden Seite des Abdeckabschnitts 15 vorbeibewegt bzw. abgewälzt, wodurch der Abdeckabschnitt 15 verschwenkt wird.

Zum Antreiben der Andruckeinrichtung 79 ist diese mit einer Zahnscheibe 85 gekoppelt, deren Zähne in die Zähne einer Zahnstange 87 eingreifen, welche wiederum mit einem nicht dargestellten Motor gekoppelt ist. Zum Antreiben der Andruckeinrichtung 79 kann auch ein Kurbeltrieb vorgesehen sein. Als Antrieb kann z.B. ein pneumatischer Antrieb zum Einsatz kommen. Zum Antreiben der Andruckeinrichtung 79 kann auch die Schließbewegung der Greifeinrichtung 29 eingesetzt werden.

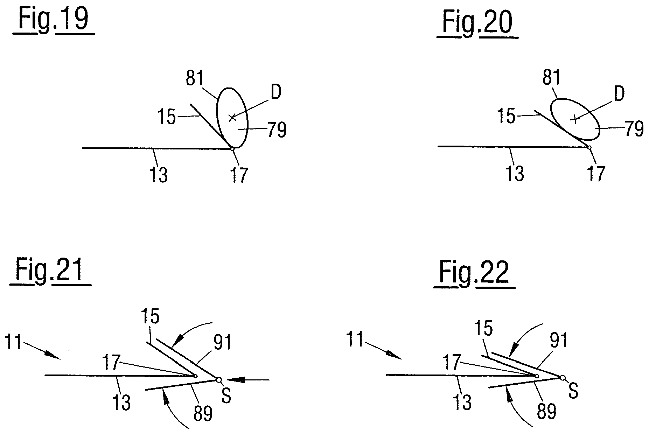

Die Fig. 19 und 20 zeigen eine gegenüber der Fig. 18 abgewandelte Variante, bei der die Greifeinrichtungen 19, 29 zum Aufnehmen von Produktträger 11 und Produkt 25 nicht gezeigt sind. Die um die Drehachse D drehbare Andruckeinrichtung 79 weist eine an den Faltvorgang angepasste, ovale Außenkontur 81 auf und sie ist während des Faltvorgangs, also während des Verschwenkens des Abdeckabschnitts 15 um die Knicklinie 17, parallel zur Auflagefläche des Grundabschnitts 13 und insbesondere senkrecht zur Knicklinie 17 bewegbar, z.B. mittels eines pneumatischen Antriebs. Durch Bewegen der Andruckeinrichtung 79 gegen den bereits hochgeklappten, vor der Andruckeinrichtung 79 liegenden Abdeckabschnitt 15 kann der Verschwenkvorgang verbessert werden.

Die Andruckeinrichtung 79 kann als ein Druckluft-Körper und/oder als eine Leiste ausgebildet sein. Die Andruckeinrichtung 79 kann auch von mehreren, in einer Reihe angeordneten pneumatischen Stempeln gebildet werden. Nach einer Weiterbildung können auch mehrere Andruckeinrichtungen 79, insbesondere mehrere Stempel oder Faltkörper, in unterschiedlichen Richtungen angebracht sein und kurz nacheinander ausfahren und einfahren, um den Abdeckabschnitt 15 zu verschwenken.

Die Fig. 21 und 22 zeigen eine klammerartige Verschwenkeinrichtung. Diese umfasst zwei Schenkel 89, 91, die um eine Schwenkachse S verschwenkbar aneinander angelenkt sind. Die Schenkel 89, 91 können in einer offenen Stellung, in welcher die beiden Schenkel 89, 91 z.B. in einer Ebene liegen, unter den Abdeckabschnitt 15 bzw. den Grundabschnitt 13 eines Produktträgers 11 gebracht werden, so dass die Schwenkachse S parallel zur Knicklinie 17 ausgerichtet ist. Wenigstens ein Schenkel 89, 91, vorzugsweise der vom Grundabschnitt 13 abgewandte Schenkel 91, wird um die Schwenkachse S verschwenkt, um mit dem anderen Schenkel 89 eine V-förmige Anordnung zu bilden. Dabei kann der Abdeckabschnitt 15 mitgenommen und somit ebenfalls verschwenkt werden, wie die Fig. 21 und 22 zeigen.

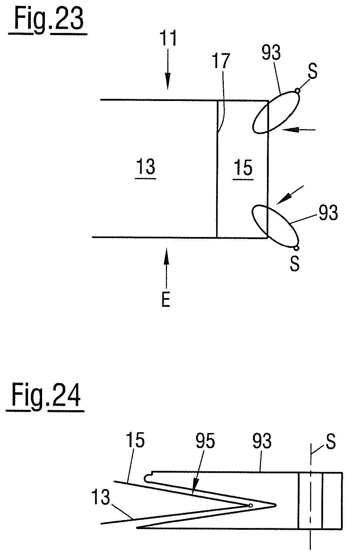

Die Fig. 23 zeigt eine Draufsicht auf eine Verschwenkeinrichtung, die zwei um eine jeweilige Schwenkachse S verschwenkbare Drehelemente 93 aufweist. Die Drehelemente 93 können innerhalb zweier Greifeinrichtungen 19, 29 angeordnet sein, mittels denen ein Produktträger 11 aufgenommen werden kann (nicht gezeigt). Die Schwenkachsen S verläuft senkrecht zu einer Ebene E, in welcher der flache Produktträger 11 mit noch nicht verschwenktem Abdeckabschnitt 15 liegt. Die Drehelemente 93 liegen zunächst vor der von der Knicklinie 17 abgewandten Außenkante des Abdeckabschnitts 15 und werden dann um die Schwenkachse S verschwenkt, wodurch sie in Kontakt mit dem Abdeckabschnitt 15 gebracht werden. Die Drehelemente 93 können eine keilförmige Kontur aufweisen, so dass deren vordere Enden den Abdeckabschnitt 15 untergreifen können. Durch Weiterbewegen der Drehelemente 93 wird der Abdeckabschnitt 15 um die Knicklinie 17 verschwenkt. Die Drehelemente 93 können auch eine halbrunde Kontur aufweisen, also insbesondere halbmondförmig gebogen sein.

Die Fig. 24 zeigt eine abgewandelte Variante zu der Vorrichtung der Fig. 23 in einer seitlichen Ansicht. Bei der Variante der Fig. 24 weist ein jeweiliges Drehelement 93 eine dreieckige Ausnehmung 95 auf, die eine zumindest leicht spiralförmige Schlitzkontur bildet. Dabei sind bevorzugt - wie bei der Vorrichtung der Fig. 23 - mehrere Drehelemente 93 längs der Knicklinie 17 gesehen versetzt zueinander angeordnet. Durch Verdrehen der Drehelemente 23 kann der Abdeckabschnitt 15 in die Ausnehmung 95 eingefädelt und verschwenkt werden. Dabei ist es vorteilhaft, wenn der Abdeckabschnitts 15 wenigstens leicht vorgefaltet ist, bevor er in die Ausnehmung 95 eines jeweiligen Drehelements 93 eingefädelt und weiter verschwenkt wird.

### Bezugszeichenliste

- 11: Produktträger
- 13: Grundabschnitt
- 15: Abdeckabschnitt
- 17: Knicklinie
- 19: Greifeinrichtung
- 21: Verschwenkeinrichtung
- 23: Bügel
- 25: Produkt
- 27: Niederhalter
- 29: Greifeinrichtung
- 31: Nut
- 33: Kopplungseinrichtung
- 35: Bügelarm
- 37: Bügelarm
- 39: Bügelarm
- 41: Schiebeelement
- 43: Feder
- 45: Anschlag
- 47: Falteinrichtung
- 49: Aufnahme
- 51: Niederhalter
- 53: Anschlag
- 55: Halteeinrichtung
- 57: Ansaugvorrichtung
- 59: Saugleiste
- 61: Schlauch
- 63: Saugnapf
- 65: Saugnapf
- 67: Klappe
- 69: Antrieb
- 71: Klappe
- 73: Schlitz
- 75: Klappe
- 77: Verschwenkeinrichtung
- 79: Andruckeinrichtung
- 81: Kontur
- 83: Auskragung
- 85: Zahnscheibe
- 87: Zahnstange
- 89: Schenkel
- 91: Schenkel
- 93: Drehelement
- 95: Ausnehmung
- S: Schwenkachse
- P: Pfeil
- D: Drehachse
- R: Drehrichtung
- E: Ebene

## Patentansprüche

1. Übergabeeinrichtung zur Aufnahme wenigstens eines auf einem Grundabschnitt (13) eines Produktträgers (11) liegenden Produkts (25) und des Produktträgers (11) von einer Förder- und/oder Bearbeitungseinrichtung für das Produkt (25) und/oder für den Produktträger (11) und zur Zuführung des Produkts (25) mitsamt dem Produktträger (11) zu einer nachgeordneten Einrichtung, insbesondere einer Verpackungsmaschine,
wobei die Übergabeeinrichtung eine Verschwenkeinrichtung aufweist, die zum Verschwenken eines mit dem Grundabschnitt (13) zusammenhängenden Abdeckabschnitts (15) um eine zwischen dem Abdeckabschnitt (15) und dem Grundabschnitt (13) verlaufende Knicklinie (17) konfiguriert ist,
**dadurch gekennzeichnet,**
**dass** die Übergabeeinrichtung als Robotergreifer oder wenigstens als ein Teil eines Robotergreifers ausgebildet ist.

2. Übergabeeinrichtung nach Anspruch 1,
**dadurch gekennzeichnet,**
**dass** die Übergabeeinrichtung wenigstens eine bewegbare Greifeinrichtung (19, 29), insbesondere Schaufel, zum zumindest teilweisen Untergreifen zumindest des Abdeckabschnitts (15) des Produktträgers (11) aufweist.

3. Übergabeeinrichtung nach Anspruch 2,
**dadurch gekennzeichnet,**
**dass** die Verschwenkeinrichtung an der Greifeinrichtung (19, 29) angeordnet ist und/oder von einem Teil der Greifeinrichtung (19, 29) gebildet wird, und/oder,
**dass** die Verschwenkeinrichtung mittels einer Bewegung der Greifeinrichtung (19, 29) zum Verschwenken des Abdeckabschnitts (15) betätigbar ist, und/oder,
**dass** die Verschwenkeinrichtung unabhängig von einer Bewegung der Greifeinrichtung (19, 29) zum Verschwenken des Abdeckabschnitts (15) betätigbar ist.

4. Übergabeeinrichtung nach einem der vorhergehenden Ansprüche,
**dadurch gekennzeichnet,**
**dass** diese wenigstens einen, insbesondere auf und ab bewegbaren, Niederhalter (27, 51) zum Niederhalten des Produktes (25) aufweist.

5. Übergabeeinrichtung nach Anspruch 4,
**dadurch gekennzeichnet,**
**dass** die Verschwenkeinrichtung an der Greifeinrichtung (19) derart angeordnet ist, dass sie, insbesondere an einer Oberseite der Greifeinrichtung (19), unterhalb des Abdeckabschnitts (15) liegt, wenn die Greifeinrichtung (19) den Abdeckabschnitt (15) wenigstens teilweise untergreift, und dass zum Verschwenken des Abdeckabschnitts (15) um die Knicklinie (17) die Verschwenkeinrichtung gegen den Abdeckabschnitt (15), insbesondere von einer Ausgangsstellung in eine Endstellung, verstellbar ist,
wobei insbesondere zum Verstellen der Verschwenkeinrichtung, insbesondere von der Ausgangsstellung in die Endstellung und umgekehrt, die Verschwenkeinrichtung um eine Schwenkachse (S) verschwenkbar ist, die vorzugsweise wenigstens annähernd parallel zur Knicklinie (17) verläuft.

6. Übergabeeinrichtung nach einem der Ansprüche 1 bis 4,
**dadurch gekennzeichnet,**
**dass** die Übergabeeinrichtung wenigstens eine Greifeinrichtung (19, 29) zum Aufnehmen des Produktträgers (11) mitsamt des auf dem Grundabschnitt (13) liegenden Produkts (25) aufweist, wobei die Greifeinrichtung (19, 29) den Produktträger (25) derart aufnimmt, dass der Abdeckabschnitt (15) frei zugänglich ist, und
**dass** die Greifeinrichtung (19, 29) den Abdeckabschnitt (15) einer Falteinrichtung (47) zuführt, mittels welcher der Abdeckabschnitt (15) um die Knicklinie (17) relativ zum Grundabschnitt (13) verschwenkt wird,
wobei insbesondere vorgesehen ist, dass die Verschwenkung des Abdeckabschnitts (15) durch eine Bewegung der Greifeinrichtung (19, 29) relativ zu der, vorzugsweise starr in einem zugeordneten Arbeitsbereich angeordneten, Falteinrichtung (47) erfolgt, oder
**dass** die Falteinrichtung (47) zusätzlich oder alternativ zu der Greifeinrichtung (19, 29) beweglich ist, um durch eine Relativbewegung zwischen Falteinrichtung (47) und Greifeinrichtung (19, 29) den Abdeckabschnitt (15) zu verschwenken.

7. Förderlinie mit einer Übergabeeinrichtung nach einem der Ansprüche 1 bis 6,
wobei die Übergabeeinrichtung in Förderrichtung gesehen zwischen der Förder- und/oder Bearbeitungseinrichtung und der Verpackungsmaschine angeordnet ist, und/oder
wobei der Roboter zum Übertragen, mittels der Übergabeeinrichtung, eines Produktträgers (11) mit darauf liegendem Produkt (25) von der Förder- und/oder Bearbeitungseinrichtung zu der Verpackungsmaschine ausgebildet ist.

8. Verfahren zur Handhabung von Produkten, insbesondere von Portionen, die eine oder mehrere von einem Lebensmittel wie z.B. einem Wurst- oder Käselaib abgetrennte Scheiben umfassen, bei dem
- wenigstens ein Produkt (25) auf einen Grundabschnitt (13) eines Produktträgers (11) gelegt wird, der einen mit dem Grundabschnitt (13) zusammenhängenden Abdeckabschnitt (15) umfasst,
- der Produktträger (11) auf einer Übergabeeinrichtung nach einem der Ansprüche 1 bis 6, fixiert wird, und
- der Abdeckabschnitt (15) verschwenkt wird, insbesondere durch Hochstellen und Umlegen in Richtung des Produkts (25),
wobei insbesondere der verschwenkte Abdeckabschnitt (15) fixiert wird.

9. Verfahren zur Handhabung von Produkten, insbesondere von Portionen, die eine oder mehrere von einem Lebensmittel wie z.B. einem Wurst- oder Käselaib abgetrennte Scheiben umfassen, bei dem
- ein Produktträger (11), der einen Grundabschnitt (13) und einen mit dem Grundabschnitt (13) zusammenhängenden Abdeckabschnitt (15) umfasst und der dazu dient, wenigstens ein auf dem Grundabschnitt (13) aufliegendes Produkt (25) zu tragen, auf einer Unterlage fixiert wird,
- der Abdeckabschnitt (15) auf ein aufliegendes Produkt (25) verschwenkt wird,
- mittels einer Niederhalters der Produktträger (11) zusammen mit dem zwischen Grundabschnitt (13) und Abdeckabschnitt (15) fixiertem Produkt (25) bezüglich der Unterlage fixiert wird, und
- der Produktträger (11) zusammen mit dem Produkt (25) mittels einer zwischen Unterlage und Grundabschnitt (13) greifenden Übergabeeinrichtung nach einem der Ansprüche 1 bis 6, aufgenommen wird,
wobei insbesondere der verschwenkte Abdeckabschnitt (15) fixiert wird.

## Claims

1. A transfer device for picking up at least one product (25) disposed on a base section (13) of a product carrier (11) and the product carrier (11) from a conveying and/or processing device for the product (25) and/or for the product carrier (11) and for delivering the product (25) together with the product carrier (11) to a device arranged downstream, in particular to a packaging machine,
wherein the transfer device has a pivoting device which is configured to pivot a cover section (15) connected to the base section (13) about a kink line (17) extending between the cover section (15) and the base section (13),
**characterized in that**
the transfer device is configured as a robot gripper or at least as a part of a robot gripper.

2. A transfer device in accordance with claim 1,
**characterized in that**
the transfer device has at least one movable gripping device (19, 29), in particular a claw, for at least partly engaging beneath at least the cover section (15) of the product carrier (11).

3. A transfer device in accordance with claim 2,
**characterized in that**
the pivoting device is arranged at the gripping device (19, 29) and/or is formed by a part of the gripping device (19, 29);
and/or
**in that** the pivoting device can be actuated to pivot the cover section (15) by means of a movement of the gripping device (19, 29);
and/or
**in that** the pivoting device can be actuated to pivot the cover section (15) independently of a movement of the gripping device (19, 29).

4. A transfer device in accordance with any one of the preceding claims,
**characterized in that**
it has at least one downholder (27, 51), which can in particular be moved up and down, for holding down the product (25).

5. A transfer device in accordance with claim 4,
**characterized in that**
the pivoting device is arranged at the gripping device (19) such that it is disposed beneath the cover section (15), in particular at an upper side of the gripping device (19), when the gripping device (19) at least partly engages beneath the cover section (15); and **in that** the pivoting device is adjustable toward the cover section (15), in particular from a starting position into an end position, to pivot the cover section (15) about the kink line (17),
with the pivoting device being pivotable about a pivot axis (S), which preferably extends at least approximately in parallel with the kink line (17), in particular to adjust the pivoting device, in particular from the starting position into the end position and vice versa.

6. A transfer device in accordance with any one of the claims 1 to 4,
**characterized in that**
the transfer device has at least one gripping device (19, 29) for picking up the product carrier (11) together with the product (25) disposed on the base section (13), with the gripping device (19, 29) picking up the product carrier (11) such that the cover section (15) is freely accessible; and
**in that** the gripping device (19, 29) delivers the cover section (15) to a folding device (47) by means of which the cover section (15) is pivoted about the kink line (17) relative to the base section (13),
with provision in particular being made that the pivoting of the cover section (15) takes place by a movement of the gripping device (19, 29) relative to the folding device (47) which is preferably rigidly arranged in an associated work region; or
**in that** the folding device (47) is movable in addition to or alternatively to the gripping device (19, 29) to pivot the cover section (15) by a relative movement between the folding device (47) and the gripping device (19, 29).

7. A conveying line having a transfer device in accordance with any one of the claims 1 to 6,
wherein the transfer device is arranged between the conveying and/or processing device and the packaging machine, viewed in the conveying direction; and/or
wherein the robot is configured to transfer a product carrier (11) with a product (25) disposed thereon by means of the transfer device from the conveying and/or processing device to the packaging machine.

8. A method of handling products, in particular portions, which comprise one or more slices cut off from a food such as a loaf of sausage or cheese, in which
- at least one product (25) is placed onto a base section (13) of a product carrier (11) which comprises a cover section (15) connected to the base section (13);
- the product carrier (11) is fixed on a transfer device in accordance with any one of the claims 1 to 6; and
- the cover section (15) is pivoted, in particular by rising up and relocating in the direction of the product (25),
with the pivoted cover section (15) in particular being fixed.

9. A method of handling products, in particular portions, which comprise one or more slices cut off from a food such as a loaf of sausage or cheese, in which
- a product carrier (11) which comprises a base section (13) and a cover section (15) connected to the base section (13) and which serves to carry at least one product (25) lying on the base section (13) is fixed on a support;
- the cover section (15) is pivoted onto a lying product (25);
- the product carrier (11) together with the product (25) fixed between the base section (13) and the cover section (15) is fixed with respect to the support by means of a downholder; and
- the product carrier (11) together with the product (25) is picked up by means of a transfer device in accordance with any one of the claims 1 to 6 gripping between the support and the base section (13),
with the pivoted cover section (15) in particular being fixed.

## Revendications

1. Dispositif de transfert pour recevoir au moins un produit (25), situé sur une partie de base (13) d'un support de produit (11), et ledit support de produit (11) depuis un moyen de convoyage et/ou de traitement pour le produit (25) et/ou pour le support de produit (11) et pour amener le produit (25), y compris le support de produit (11), jusqu'à un dispositif disposé en aval, en particulier une machine d'emballage,
dans lequel
le dispositif de transfert comprend un moyen de pivotement qui est configuré pour pivoter une partie de recouvrement (15) liée à la partie de base (13) autour d'une ligne de pliage (17) qui s'étend entre la partie de recouvrement (15) et la partie de base (13),
**caractérisé en ce que**
le dispositif de transfert est réalisé sous la forme d'un préhenseur de robot ou au moins sous la forme d'une partie d'un préhenseur de robot.

2. Dispositif de transfert selon la revendication 1,
**caractérisé en ce que**
le dispositif de transfert comprend au moins un moyen de préhension mobile (19, 29), en particulier une aube, pour engager par le dessous au moins partiellement la partie de recouvrement (15) du support de produit (11).

3. Dispositif de transfert selon la revendication 2,
**caractérisé en ce que**
le moyen de pivotement est agencé sur le moyen de préhension (19, 29) et/ou est formé par une partie du moyen de préhension (19, 29),
et/ou
le moyen de pivotement est actionnable par un mouvement du moyen de préhension (19, 29) pour pivoter la partie de recouvrement (15),
et/ou
le moyen de pivotement est actionnable indépendamment d'un mouvement du moyen de préhension (19, 29) pour pivoter la partie de recouvrement (15).

4. Dispositif de transfert selon l'une des revendications précédentes,
**caractérisé en ce que**
celui-ci comprend au moins un élément de maintien vers le bas (27, 51) en particulier mobile vers le haut et vers le bas, destiné à maintenir le produit (25) vers le bas.

5. Dispositif de transfert selon la revendication 4,
**caractérisé en ce que**
le moyen de pivotement est agencé sur le moyen de préhension (19) de manière à se trouver en particulier sur une face supérieure du moyen de préhension (19) au-dessous de la partie de recouvrement (15), lorsque le moyen de préhension (19) engage par le dessous au moins partiellement la partie de recouvrement (15),
et **en ce que**
pour pivoter la partie de recouvrement (15) autour de la ligne de pliage (17), le moyen de pivotement est déplaçable contre la partie de recouvrement (15), en particulier depuis une position initiale jusque dans une position finale,
et en particulier, pour déplacer le moyen de pivotement, en particulier depuis la position initiale jusque dans la position finale et inversement, le moyen de pivotement peut pivoter autour d'un axe de pivotement (S) qui s'étend de préférence au moins approximativement parallèlement à la ligne de pliage (17).

6. Dispositif de transfert selon l'une des revendications 1 à 4,
**caractérisé en ce que**
le dispositif de transfert comprend au moins un moyen de préhension (19, 20) pour recevoir le support de produit (11), y compris le produit (25) situé sur la partie de base (13), le moyen de préhension (19, 29) recevant le support de produit (25) de telle sorte que la partie de recouvrement (15) est librement accessible, et
le moyen de préhension (19, 29) amène la partie de recouvrement (15) à un dispositif de pliage (47) à l'aide duquel la partie de recouvrement (15) est pivotée autour de la ligne de pliage (17) par rapport à la partie de base (13), et en particulier, il est prévu que le pivotement de la partie de recouvrement (15) s'effectue par un mouvement du moyen de préhension (19, 29) par rapport au dispositif de pliage (47) agencé de préférence rigidement dans une zone de travail associée, ou
le dispositif de pliage (47) est mobile en supplément ou alternativement au moyen de préhension (19, 29) pour pivoter la partie de recouvrement (15) par un mouvement relatif entre le dispositif de pliage (47) et le moyen de préhension (19, 29).

7. Ligne de convoyage comportant un dispositif de transfert selon l'une des revendications 1 à 6,
dans laquelle
le dispositif de transfert, vu en direction de convoyage, est agencé entre le moyen de convoyage et/ou de traitement et la machine d'emballage, et/ou le robot est réalisé pour le transfert d'un support de produit (11) avec un produit (25) situé sur celui-ci, depuis le moyen de convoyage et/ou de traitement jusqu'à la machine d'emballage à l'aide du dispositif de transfert.

8. Procédé de manipulation de produits, en particuliers de portions comprenant une ou plusieurs tranches séparées d'un produit alimentaire, tel qu'une meule de fromage ou de saucisse,
dans lequel
- au moins un produit (25) est posé sur une partie de base (13) d'un support de produit (11) qui comprend une partie de recouvrement (15) liée à la partie de base (13),
- le support de produit (11) est fixé sur un dispositif de transfert selon l'une des revendications 1 à 6, et
- la partie de recouvrement (15) est pivotée, en particulier par redressage et rabattement en direction du produit (25), et
en particulier la partie de recouvrement (15) pivotée est fixée.

9. Procédé de manipulation de produits, en particuliers de portions comprenant une ou plusieurs tranches séparées d'un produit alimentaire, tel qu'une meule de fromage ou de saucisse,
dans lequel
- un support de produit (11) qui comprend une partie de base (13) et une partie de recouvrement (15) liée à la partie de base (13) et qui sert à porter au moins un produit (25) reposant sur la partie de base (13), est fixé sur une embase,
- la partie de recouvrement (15) est pivotée sur un produit déposé (25),
- à l'aide d'un élément de maintien vers le bas, le support de produit (11) est fixé par rapport à l'embase, conjointement avec le produit (25) fixé entre la partie de base (13) et la partie de recouvrement (15), et
- le support de produit (11) est reçu conjointement avec le produit (25) à l'aide d'un dispositif de transfert selon l'une des revendications 1 à 6 s'engageant entre l'embase et la partie de base (13), et
en particulier, la partie de recouvrement (15) pivotée est fixée.
